# EUROPEAN PATENT APPLICATION

(11) **EP 2 375 333 A2**
(43) Date of publication of application: **12.10.2011**
(21) Application number: 11250458.4
(22) Date of filing: 11.04.2011
(51) Int. Cl.: G06F 11/10

(54) **Avionic data validation system**

(30) Priority: 09.04.2010 US 757449
(71) Applicant: United Technologies Corporation, Hartford, CT 06101 (US)
(72) Inventor: Beacham, William H., Enfield Connecticut 06082 (US); Mattei, David M., Bolton Connecticut 06043 (US)
(74) Representative: Tomlinson, Kerry John

(57) **Abstract**

An example method of verifying avionic data includes establishing a first cyclic redundancy check value associated with a data file. The first cyclic redundancy value is established on an aircraft. The method transmits the data file from the aircraft to a ground system. The method receives a second cyclic redundancy check value associated with the data file. The second cyclic redundancy check value is established by the ground system. The method determines the transmitted data file integrity by comparing the first cyclic redundancy check value to the second cyclic redundancy check value. An example aircraft avionic data verification arrangement includes a collector device that assembles avionic data into a data file that is transmittable to a ground system. A controller is programmed to provide a first cyclic redundancy check value associated with the data file and to identify errors in the data file received by the ground system based on a comparison between the first cyclic redundancy check value and a second cyclic redundancy check value established by the ground system.

## Description

### BACKGROUND

This disclosure relates generally to avionic data. More particularly, this disclosure relates to validating that avionic data transmitted from an aircraft is accurate.

Avionic data is collected from various areas of aircraft. The avionic data is typically assembled into data files using equipment on the aircraft. The data is then transferred to a ground system where the avionic data is used to make maintenance decisions about components of the aircraft.

The accuracy of data within data files that have not been validated is questionable. To retrieve the data files for the ground system, a mechanic may use a device that plugs into the equipment on the aircraft. The data files are copied to directly to the device, and the device is then manually transported to the ground system. In another example, the data files are transferred from the equipment on the aircraft to a server of the ground system using a standard network protocol, such as File Transfer Protocol or Virtual Private Network. To make the data available for critical decisions, the final data file on the ground system must be verified using hardware and software that has been validated to the equivalent avionic software and hardware assurance standards as for the data collection and transfer process.

### SUMMARY

An example method of verifying avionic data includes establishing a first cyclic redundancy check value associated with a data file. The first cyclic redundancy value is established on an aircraft. The method transmits the data file from the aircraft to a ground system. The method receives a second cyclic redundancy check value associated with the data file. The second cyclic redundancy check value is established by the ground system. The method determines if the data file was transmitted accurately using the first cyclic redundancy check value and the second cyclic redundancy check value.

Another example method of verifying avionic data includes receiving a data file from an aircraft. The data file is associated with a first cyclic redundancy check value. The method establishes a second cyclic redundancy check value for the data file. The method identifies an error in the data file received from the aircraft based on a comparison of the first and second cyclic redundancy check values.

An example avionic data verification arrangement includes a collector device that assembles avionic data into a data file that is transmittable to a ground system. A controller is programmed to provide a first cyclic redundancy check value associated with the data file and to identify errors in the data file received by the ground system based on a comparison between the first cyclic redundancy check value and a second cyclic redundancy check value established by the ground system.

These and other features of the disclosed examples can be best understood from the following specification and drawings, the following of which is a brief description:

### BRIEF DESCRIPTION OF THE DRAWINGS

Figure 1 shows a partial schematic view of an example data collection system within gas turbine engine.
Figure 2 shows a schematic view of an arrangement for communicating data files from an aircraft to a ground system.
Figure 3 shows a flow of an example method of verifying data files from an aircraft.
Figure 4 shows a flow of another example method of verifying data files from an aircraft.

### DETAILED DESCRIPTION

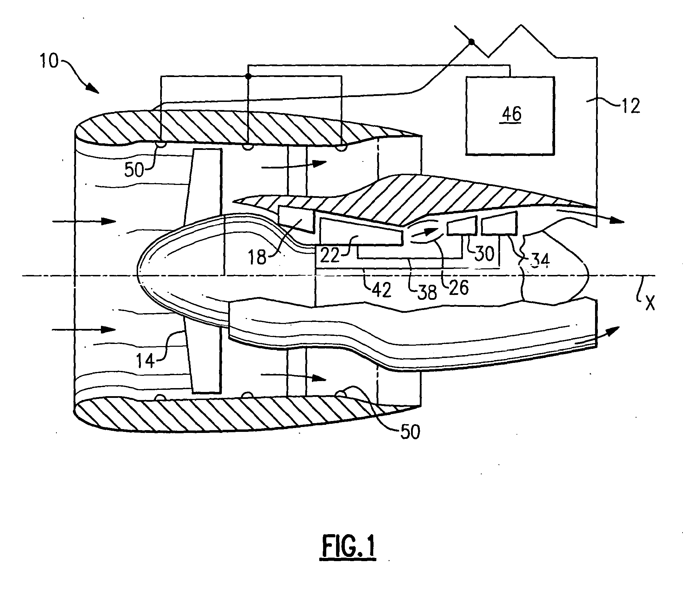

Figure 1 schematically illustrates an example turbofan gas turbine engine 10 of an aircraft 12. The gas turbine engine 10 includes (in serial flow communication) a fan section 14, a low-pressure compressor 18, a high-pressure compressor 22, a combustor 26, a high-pressure turbine 30, and a low-pressure turbine 34. The gas turbine engine 10 is circumferentially disposed about an engine centerline X.

During operation, air is pulled into the gas turbine engine 10 by the fan section 14, pressurized by the compressors 18 and 22, mixed with fuel, and burned in the combustor 26. The turbines 30 and 34 extract energy from the hot combustion gases flowing from the combustor 26. The residual energy is then expanded through the nozzle section to produce thrust.

In a two-spool design, the high-pressure turbine 30 utilizes the extracted energy from the hot combustion gases to power the high-pressure compressor 22 through a high speed shaft 38, and the low-pressure turbine 34 utilizes the extracted energy from the hot combustion gases to power the low-pressure compressor 18 and the fan section 14 through a low speed shaft 42.

In this example, a prognostic and health monitoring system 46 is mounted to the aircraft 12. The prognostic and health monitoring system 46 communicates with a plurality of sensors 50 mounted within the engine system 10. The sensors 50 collect avionic data about the engine 10 during operation. Examples of the collected avionic data include temperatures, pressures, altitudes, etc.

The examples described in this disclosure are not limited to any specific engine architecture or to the engine system. Additional examples may include data from any system installed on the aircraft such as the landing gear system, environmental control system, braking system, navigational system, entertainment system, etc.

Further, although the avionic data is collected from sensors 50 mounted in the engine 10, those skilled in the art and having the benefit of this disclosure will understand that avionic data could be collected from sensors 50 or other data collection devices mounted in other areas of the aircraft 12 or from any data source that may include intermediate calculation output or memory locations not directly associated with a sensor.

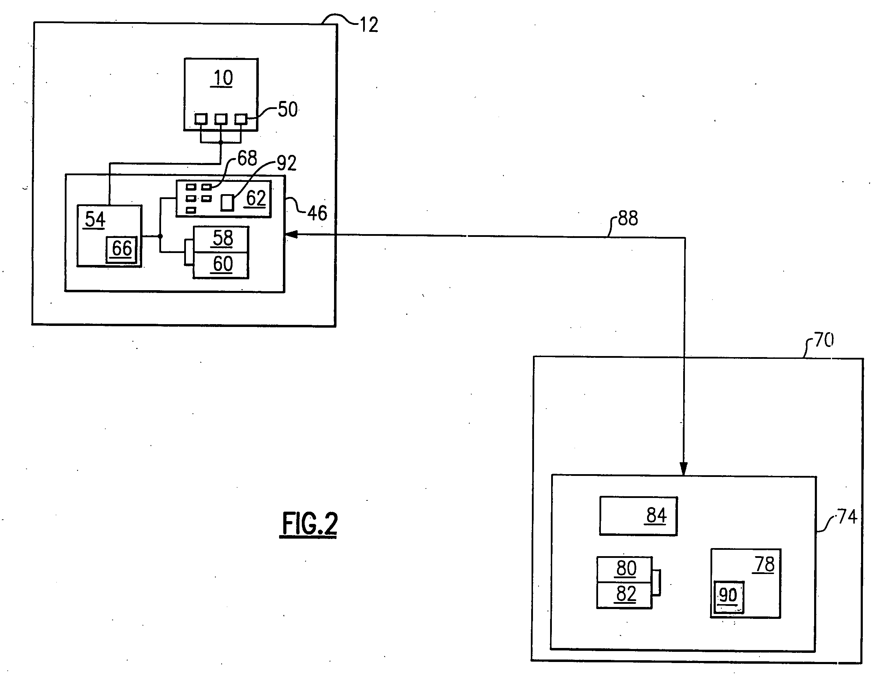

Referring now to Figure 2 with continuing reference to Figure 1, the example prognostic and health monitoring system 46 includes a programmable controller 54, a wireless transmitter 58, a wireless receiver 60, and a memory portion 62. The controller 54 includes a collector device, i.e., a processor module 66 programmed to collect data from the sensors 50 and store them in one or more of the data files 68 within the memory portion 62. The collection and storage takes place during flight of the aircraft 12, for example.

A ground system 70 includes a communication device 74 having a controller 78, a wireless transmitter 80, a wireless receiver 82, and a memory portion 84. The ground system 70 is configured to wirelessly communicate with the prognostic and health monitoring system 46 of the aircraft 12 along a wireless communication path 88.

In this example, the ground system 70 wirelessly communicates with the aircraft 12 when the aircraft 12 is docked at a gate. In other examples, the ground system 70 wirelessly communicates with the aircraft 12 when the aircraft 12 is in flight, or when the aircraft 12 is docked in a maintenance facility.

Many computing devices can be used to implement various functions described herein. For example, the controller 54, transmitter 58 and memory portion 62 may comprise portions of a dual architecture micro server card within the prognostic and health monitoring system 46.

Further, in terms of hardware architecture, prognostic and health monitoring system 46 can additionally include one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as additional controllers, buffers (caches), drivers, repeaters, and receivers to enable communications. Further, the local interface may include address, control, and/or data connections to enable appropriate communications among the aforementioned components.

The example processor module 66 executes software code, particularly software code stored in the memory portion 62. The processor module 66 can be a custom made or commercially available processor, a central processing unit (CPU), an auxiliary processor among several processors associated with the computing device, a semiconductor based microprocessor (in the form of a microchip or chip set) or generally any device for executing software instructions.

The memory portion 62 can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory may incorporate electronic, magnetic, optical, and/or other types of storage media. Note that the memory can also have a distributed architecture, where various components are situated remotely from one another, but can be accessed by the processor.

The software in the memory portion 62 may include one or more additional or separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The Input/Output devices that may be coupled to system I/O Interface(s) may include input devices, for example but not limited to, a keyboard, mouse, scanner, microphone, camera, proximity device, etc. Further, the Input/Output devices may also include output devices, for example but not limited to, a printer, display, etc. Finally, the Input/Output devices may further include devices that communicate both as inputs and outputs, for instance but not limited to, a modulator/demodulator (modem; for accessing another device, system, or network), a radio frequency (RF) or other transceiver, a telephonic interface, a bridge, a router, etc.

In this example, the processor module 66 of the prognostic and health monitoring system 46 is programmed with software code that has been certified by the appropriate Avionic Certification Authority, such as the Federal Aviation Administration (FAA). For example, the software code is certified to DO178: Software Considerations in Airborne Systems and Equipment Certification, for use in Level C applications, where failure of the software results in a major failure condition for the vehicle, or higher. The certified software code is configured to assemble the collected data into the data files 68 that are transferred wirelessly to the ground system 70.

In this example, the certified software code also generates a first Cyclic redundancy Check (CRC) value 92 based on the data files 68. The first CRC value 92 is stored in the memory portion 62 in this example. CRC calculations are standard in many industries as is known.

After the ground system communication device 74 receives the data files 68, a program executed in a module 90 of the controller 78 generates a second CRC value (not shown) based on the data files 68 received by the communication device 74. In this example, the hardware and software executed in the module 90 is not certified to the commensurate DO178 level or applicable avionic software assurance level. That is, the first CRC value 92 is generated using certified software code, and the second CRC value is generated using software code that has not been certified.

The wireless transmitter 80 wirelessly communicates the second CRC value to the prognostic and health monitoring system 46. The controller 54 then compares the first CRC value 92 stored in memory portion 62 with the second CRC value created by the ground system. In this example, if the first CRC value 92 matches the second CRC value, the transmission of the data files 68 is considered successful. That is, the data files 68 were received by the ground system 70 without errors. Maintenance decisions about the aircraft 12 can be made based on the data within the data files 68 received by the ground system 70 if the data files 68 do not contain errors.

In this example, the transmitter 58 communicates a message to the ground system indicating whether the data files 68 were transmitted without error. The ground system then attaches the received indication to the file as meta data for later use.

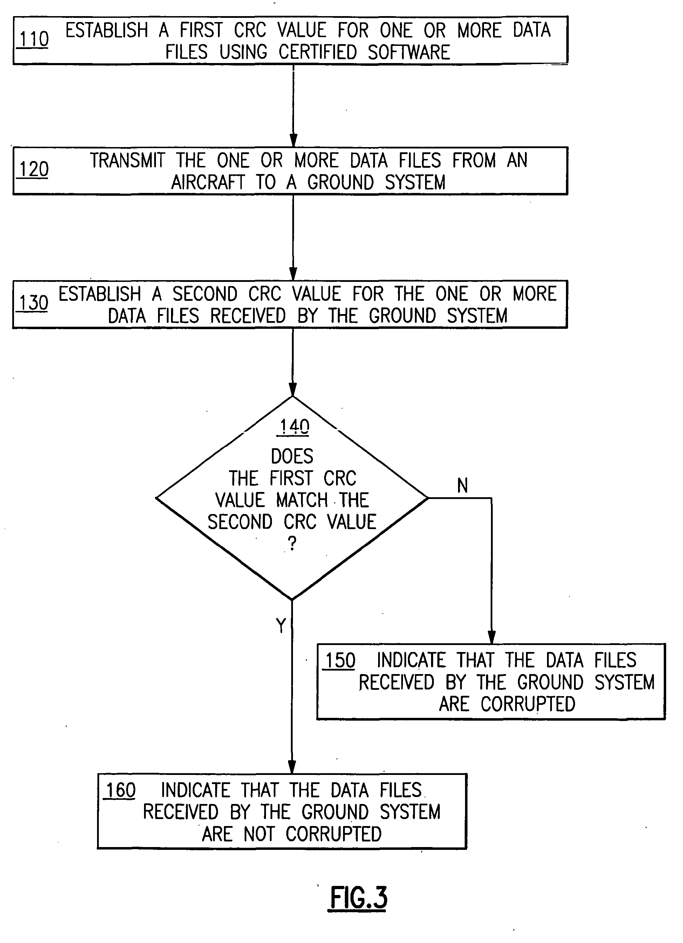

Referring to Figure 3, a flow of an example data verification method 100 includes a step 110 of establishing a first CRC value associated with one or more data files. The data files are then transmitted from an aircraft to a ground system at a step 120. The ground system establishes a second CRC value associated with the one or more data files that are received by the ground system at a step 130.

The first and second CRC values are compared at a step 140. In this example, the comparison talks place in the aircraft. Other examples include comparing the first and second CRC values in the ground system or elsewhere.

If the first and second CRC values do not match, the method 100 indicates that, at a step 150, the data files received by the ground system contain an error or are corrupted. If the first and second CRC values do match, the method indicates, at a step 160, that the data files received by the ground system do not contain an error.

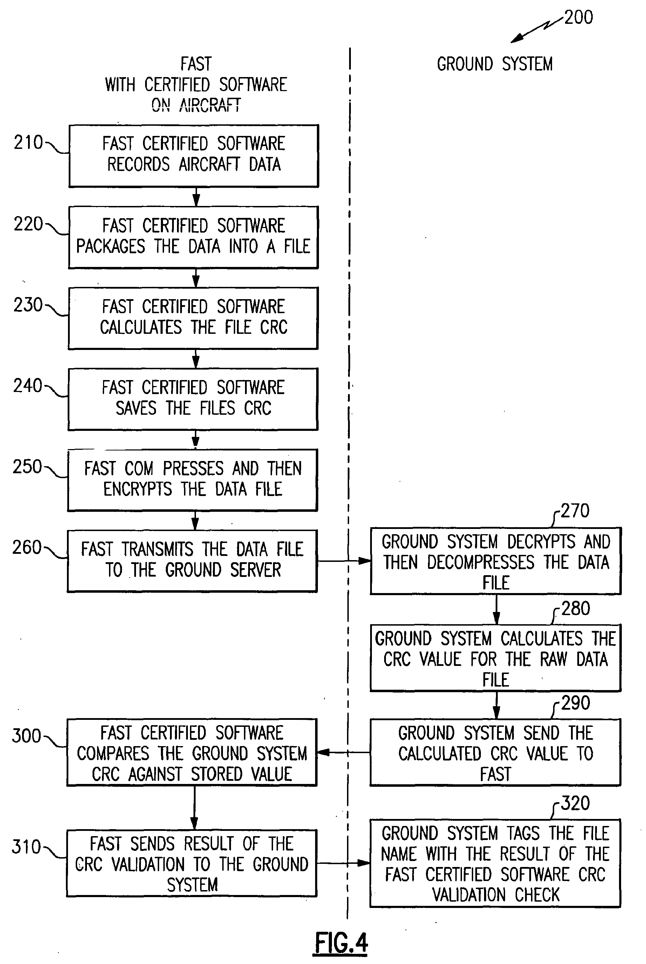

Referring to Figure 4, another example data verification method 200 uses certified software running within a FAST box on an aircraft to record aircraft data at a step 210. The FAST box is an example of a Dual Architecture Micro Server Card, an avionic device that resides on the aircraft for collecting, securing, and transmitting data. The method 200 next uses the certified software to package the data into a data file at a step 220. The certified software within the FAST box then calculates an aircraft CRC value for the data file at a step 230, and saves the aircraft CRC value at a step 240. The FAST box compresses and encrypts the data file at a step 250, and communicates the data file to a ground system at a step 260.

In this example, software programs executed on the ground system decrypt and decompress the data file at a step 270. The software programs executed on the ground system then calculate a ground system CRC value for the decrypted and decompressed raw data file at a step 280. The ground system sends the ground system calculated CRC value back to the FAST box on the aircraft at a step 290.

At a step 300, the certified software running within the FAST box on the aircraft compares the aircraft calculated CRC value to the ground system calculated CRC value. The FAST box sends the results of the comparison to the ground system at a step 310. The ground system, at a step 320, tags or associates the data file with the results of the comparison by the FAST box in the step 310. The tag identifies the data file as acceptable (if the aircraft CRC value matches the ground system CRC value) or corrupted (if the aircraft CRC value does not match the ground system CRC value).

Features of the disclosed examples include ensuring the integrity of a wireless transmission of data files to a ground system without requiring the ground system, or intermediate "hops", to be programmed with software qualified to avionic software assurance levels.

The preceding description is exemplary rather than limiting in nature. A person of ordinary skill in this art may recognize certain variations and modifications to the disclosed examples that do not depart from the essence of this disclosure. For that reason, the following claims should be studied to determine the true scope of legal protection given to this disclosure.

## Claims

1. A method of verifying avionic data, comprising:
receiving at least one data file from an aircraft (12), the at least one data file being associated with a first cyclic redundancy check value;
establishing a second cyclic redundancy check value for the at least one data file; and
identifying an error in the at least one data file received from the aircraft based on a comparison of the first and second cyclic redundancy check values.

2. The method of claim 1, wherein the at least one data file is received at a ground system (70).

3. The method of claim 1 or 2, wherein the first cyclic redundancy check value is calculated using a software code that is certified to DO178 or other applicable avionic software assurance level standard; and/or wherein the second cyclic redundancy check value is calculated using a software code that is not certified to DO178 or other applicable avionic software assurance level standard.

4. The method of claim 1, 2 or 3, including receiving a message from the aircraft indicating whether the error was identified.

5. The method of any preceding claim, including adjusting a maintenance procedure of a component (10) of the aircraft if the received at least one data file has a first cyclic redundancy check value that corresponds to the second cyclic redundancy check value.

6. The method of any preceding claim, wherein the at least one data file includes information obtained from the aircraft during flight.

7. The method of claim 1, comprising:
establishing a first cyclic redundancy check value associated with at least one data file, the first cyclic redundancy value established on an aircraft (12)
transmitting the at least one data file from the aircraft to a ground system (70);
receiving, in the aircraft, a second cyclic redundancy check value associated with the at least one data file, the second cyclic redundancy check value established by the ground system; and
determining if the at least one data file was transmitted accurately using the first cyclic redundancy check value and the second cyclic redundancy check value.

8. The method of claim 7, including sending a transmission success or fail message from the aircraft to the ground system based on the determining.

9. The method of claim 7 or 8, including using a certified software code to establish the first cyclic redundancy check value; preferably wherein avionics equipment on the aircraft is programmed with the certified software.

10. The method of claim 9, wherein the certified software code is certified to one or more aviation software assurance standards, preferably a DO178 software assurance standard.

11. The method of claim 7, 8, 9 or 10, including using a software code that is not certified to DO178 software assurance levels to establish the second cyclic redundancy check value in the ground system.

12. The method of any of claims 7 to 11, wherein the at least one data file is established using software developed to DO178 or other applicable avionic software assurance standards.

13. An avionic data verification arrangement, comprising:
a collector device (50) that assembles avionic data into at least one data file that is transmittable to a ground system (70); and
a controller (78) programmed to provide a first cyclic redundancy check value associated with the at least one data file, and to identify errors in the at least one data file received by the ground system based on a comparison between the first cyclic redundancy check value and a second cyclic redundancy check value established by the ground system.

14. The arrangement of claim 13, including a transmitter configured to communicate the at least one data file to the ground system; preferably wherein the transmitter is further configured to communicate a message to the ground system indicating whether errors were identified in the at least one data file received by the ground system.

15. The arrangement of claim 13 or 14, wherein the controller is programmed with a device application code that is certified to D0178 or other applicable avionic software assurance level standards, the device application code providing the first cyclic redundancy check value associated with the at least one data file.
